(19) **Europäisches Patentamt / European Patent Office / Office européen des brevets**

(11) **EP 1 980 154 B1**

(12) **EUROPEAN PATENT SPECIFICATION**

(45) Date of publication and mention
of the grant of the patent:
**08.10.2014 Bulletin 2014/41**

(51) Int Cl.:
*A23C 19/076* (2006.01)        *A23C 21/00* (2006.01)
*A23C 19/08* (2006.01)         *A23C 9/142* (2006.01)

(21) Application number: **07007605.4**

(22) Date of filing: **13.04.2007**

(54) **Fine textured dairy product and process for its preparation**

Milchprodukt mit feiner Textur und Herstellungsverfahren dafür

Produit laitier à texture fine et procédé pour sa préparation

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(43) Date of publication of application:
**15.10.2008 Bulletin 2008/42**

(73) Proprietor: **Kraft Foods R & D, Inc.
Deerfield, IL 60015 (US)**

(72) Inventors:
• **Eibel, Hermann, Dr.
85356 Freising (DE)**
• **Erler, Peter
83714 Miesbach (DE)**
• **Habermeier, Peter Anton
85298 Scheyern (DE)**
• **Muxfeldt, Dirk
86836 Obermeitingen (DE)**

• **Wolfschoon-Pombo, Alan Frederick, Dr.
85354 Freising (DE)**

(74) Representative: **HOFFMANN EITLE
Patent- und Rechtsanwälte
Arabellastrasse 4
81925 München (DE)**

(56) References cited:
**WO-A-2006/057968     US-A- 4 534 982
US-A- 5 094 873**

• **HUMBERT G ET AL: "EFFETS DE
L'HOMOGENEISATION A HAUTE PRESSION
SUR LES PROPRIETES DU LAIT ET SON
APTITUDE A LA COAGULATION ENZYMATIQUE"
LE LAIT, PARIS, FR, vol. 60, no. 599/600, 1980,
pages 574-594, XP008024254 ISSN: 0023-7302**

Remarks:
The file contains technical information submitted after
the application was filed and not included in this
specification

## Description

The present invention relates to finely textured cream cheese as a dairy product. Moreover, the present invention relates to a process for the preparation of said cream cheese.

## Background art

There are processes described in the art that apply ultra high pressure (UHP) homogenizing methods for the manufacture of stable oil/water emulsions. Similar processes are also used for dissipating fat aggregates to obtain small fat particles.

In addition, there are several conventional processes for the preparation of dairy products known in the art, and some of them employ homogenization steps of functionalized whey protein concentrate. However, these processes fail to provide dairy products that fulfil increasing consumer demands as regards syneresis, texture and mouthfeel. Therefore, there is a need of dairy products with improved micro-structure, enhanced creaminess and sufficient firmness.

EP 1 698 231 A1 describes cream cheese products obtainable by a process comprising the steps of:

acidifying a whey protein concentrate,

heating the acidified whey protein concentrate,

optionally blending the whey protein concentrate,

homogenizing the blend in a two-stage high pressure homogenizer at a pressure of about 300-400/50-80 bar,

blending the product and

homogenizing the product in a two-stage pressure homogenizer at a pressure of about 300-400/50-80 bar at elevated temperature.

US 6,861,080 B1 relates to dairy products obtainable by

(1) mixing dairy ingredients comprising a dairy substrate, a fat and a protein to generate a liquid dairy mix;

(2) treating the liquid dairy mix to generate an emulsion having an average fat particle size of less than about 0.8 microns;

(3) adding an acid-producing culture or an edible acid to the emulsion to reduce the pH to generate an acidified emulsion; and

(4) heating the acidified emulsion to produce a dairy product.

According to US 2004/0197450 A1, dessert or fermented products can be obtained by a method including the step of homogenizing a milk-based emulsion under pressure. US 6,605,311 B2 is directed to insoluble protein particles that are used in food and beverage products. According to the latter reference, heat-stable insoluble protein particles can be produced from an aqueous medium in a process inter alia comprising a homogenization step. US 6,497,913 B1 describes the use of a homogenizer operating at high pressures for the preparation of an aerated frozen product that allows generation of small oil droplet sizes in an ice cream premix. EP 0 250 623 B1 describes proteinaceous, water-dispersible, colloids comprising substantially non-aggregated particles of sweet whey protein coagulate. WO 92/18239 is directed to processes for making whey-derived fat substitute products. This reference describes protein and/or carbohydrate-based fat-mimicking systems in which fat globules mimicking particles of protein or carbohydrate origin are modified by encapsulation in a membrane. These systems are said to more closely mimic the characteristics of natural fat globules.

US 5,094,873 is directed to a non-fat natural cheese which is made from a first liquid non-fat milk solid substrate which is made into cheese by various known methods. In the method for making the substrate, a non-fat milk solids source, such as skim milk, is acidified to a pH below the isoelectric point. A blend of the acidified non-fat milk solids source and gum is then prepared. The blend is then subjected to high pressure homogenization to provide a dispersion of the gum in the casein of the non-fat milk solids source.

However, none of the prior art references describes dairy products such as cream cheese with improved micro-structure, enhanced creaminess and satisfying syneresis that fulfil the increasing customer demands. Therefore, there is the need for developing new processes for the preparation of such products.

In view of the above, the present inventors have created a process for the preparation of a cream cheese with improved organoleptic properties.

## Disclosure of the invention

The invention pertains to a process for the preparation of a cream cheese comprising in this order the steps of:

(i) adjusting milk protein concentrate comprising whey protein and/or casein to a pH of from 4.1-5.4,

(ii) optionally heating the milk protein concentrate and

(iii) homogenizing the milk protein concentrate at a pressure of 500 bar or above and at a temperature not exceeding 40°C, wherein the ratio of whey protein/casein is smaller than 1/1.

The present invention also relates to cream cheese having improved micro-structure and enhanced creaminess that is obtainable by this process.

Moreover, the present invention is directed to a food product comprising said cream cheese and to the use of said cream cheese as a food ingredient.

## Detailed description of the invention

The process of the invention enables the manufacture of cream cheese as a dairy product with improved organoleptic properties using a milk protein concentrate as a substrate.

Without wishing to be bound by theory, it is assumed that the present invention is based on the induction of a change in particle properties of the protein particles. In particular, it is assumed that improved organoleptic properties can be achieved by preventing re-aggregation of protein particles.

Before the present invention, UHP homogenization has not been applied to insolubilized milk protein concentrates in the manufacture of dairy products. The inventors have now found that protein aggregates can be reduced to small particles without re-aggregation. While UHP homogenization methods have been used for the manufacture of stabilized oil/water emulsions by dissipating fat aggregates to obtain small fat particles, one would not have expected that such methods can be successfully applied to protein aggregates, because there are significant differences between fat particles and protein particles. For example, fat particles are typically liquid (i.e. molten) during homogenization, whereas protein particles cannot melt but remain solid.

Milk protein concentrate in the context of the present invention means a liquid comprising water, milk proteins, fat, lactose, and other minor components like minerals. Milk protein can be categorized as whey protein and casein. In milk protein concentrate derived directly from milk, the weight ratio of whey protein to casein is about 20/80. However, milk protein concentrates with other ratios are also available. That is, the whey protein/casein weight ratio can be in the range of from 0/100 to 100/0. The milk protein concentrate can either be "whey protein dominated" (having a ratio of whey protein/casein of more than 1/1) or "casein dominated" (having a whey protein/casein ratio of less than 1/1). In the invention, the whey protein/casein ratio is smaller than 1/1.

Milk protein concentrate is usually produced from skim milk and can be obtained by a process including ultra-filtration, evaporation and drying. Other sources of milk protein concentrate include conventional sources of whey proteins and casein. Whey proteins are usually found in sweet and acid whey from cheese manufacturing. Concentrates of these sources or a combination thereof can be obtained by any dehydration method. Casein is primarily found in cow's milk.

The milk protein concentrate that is used as a substrate in the process according to the present invention typically comprises 5 wt.-% or more of protein in total. For example, the protein content may be in the range of 5-20 wt.-%. In one embodiment of the invention, the protein content is in the range of 10-20 wt.-% and preferably in the range of 10-15 wt.-%.

The fat content of the milk protein concentrate used in the invention can be between 0.2-10 wt.-%, for example between 0.5 and 7 wt.-%. In the case of "whey protein dominated" milk protein concentrates, the fat content may, for instance, be between 1 and 2 wt.-%.

The natural pH of the milk protein concentrate depends on the protein source. In commercially available products, the pH is typically above 6.

The milk protein concentrate described herein above is the substrate used as starting material in the process according to the present invention.

In the milk protein concentrate used in the process of the present invention, the proteins have to be insolubilized.

Insolubilization can be achieved by aggregation of the whey protein and/or casein. One way to achieve aggregation resides in adjusting the milk protein concentrate to a pH of from 4.1 to 5.4, or from 4.3 to 5.3 (step (i)).

The pH in step (i) is preferably adjusted to a value to correspond approximately to the isoelectric point of the milk protein concentrate. The particular value will depend on the whey protein/casein ratio in the substrate used. For example, if the milk protein concentrate has a ratio of whey protein/casein of 100/0, the pH may have to be adjusted to a higher value such as about 5.2, whereas a lower pH such as about 4.6 may be appropriate in the case of a ratio of whey protein/casein of 0/100.

The pH adjustment of the milk protein concentrate may be conducted via addition of acid or base, typically organic acids or inorganic acids such as citric acid, lactic acid, phosphoric acid, etc. or mixtures thereof. Adjustment may be done on cold or warm milk protein concentrate (that is at any temperature of from 0-60°C). It is preferable that pH adjustment is conducted under agitation so as to avoid a pH gradient across the milk protein concentrate. Alternatively, biological acidification using common dairy starter bacteria can be performed.

The subsequent optional heating step (step (ii)) aims at completing the aggregation of milk proteins, in particular whey protein, in the milk protein concentrate. In the casein dominated systems, it may not be necessary to perform the heating step. The further the ratio of whey protein/casein is below 1/1, the more heating may have to be avoided so as to prevent too strong a merging of the casein aggregates which may occur at elevated temperatures.

Heating the pH-adjusted milk protein concentrate may be carried out at temperatures of from 60-110°C. In one embodiment, heating may be carried out at temperatures of from 75-90°C. Depending on the vessel type and on the temperature, heating is carried out within a time interval of from 1.5-75 minutes.

Heating can be carried out using diverse equipment. For example, the milk protein concentrate can be heated either in a batch process or continuously in a heat exchanger. If a batch process is carried out, agitators and blades are used to scrap the surface of the tank wall and heating is preferably carried out within 15-60 minutes. If, on the other hand, heating is carried out using a continuous process, the heating time may be as short as 1.5 minutes depending on the temperature applied.

It is preferable that the degree of denaturation of proteins after step (i) and after optional step (ii) is in the range of 85 % or above. The degree of denaturation can be calculated by dividing the difference between total protein content and native protein content (total protein content - native protein content) by the total protein content:

$$\text{Degree of denaturation = (total protein content - native protein content) / total protein content}$$

Native protein content in this context is the protein with natural steric conformation as in raw milk, that is contained in the substrate that is introduced in step (i) of the invention.

The subsequent homogenization step (iii) is carried out in a homogenizer capable of achieving pressures of at least 500 bar. It is believed that step (iii) results in a specific micro-texture of the final dairy product, possibly causing disruption of the whey protein and casein aggregates formed in steps (i) and (ii) into smaller, more stable sub-aggregates.

The pressure may be, for instance, generated in a two-stage process or a single-stage process. If a two-stage process is applied, the first stage pressure is usually 500 bar or above and the second stage pressure is usually from 80 to 300 bar, preferably from 100 to 280 bar, and more preferably from 115 to 265 bar.

Homogenization in the single stage process or in the first stage of the two-stage process may be carried out at pressures of 500 bar or above, preferably in the range of from 550-1400 bar, more preferably in the range of from 600 to 1300 bar. In one embodiment, a device, such as a Pilot Ultra-homogenizer with valves of unique knife edge geometry, is used wherein three pistons are used to develop such pressures against a homogenizing valve and the pH-adjusted and optionally heated milk protein concentrate is forced through this valve, with an immediate pressure drop behind it.

The temperature in the homogenization step does not exceed 40°C and the ratio of whey protein/casein is smaller than 1/1. It has been found that these protein particles re-aggregate at elevated temperatures. Preferably, the temperature during homogenization does not exceed 20°C.

Additional steps may be employed in the process for the preparation of a dairy product of the invention such as (iv) blending the milk protein concentrate with one or more of milk fat, curd (such as semi-finished low fat, skimmed or fresh cheese curd), salt, flavours, vegetable-based material, and stabilizers. The optional blending step (iv) may be conducted before or after the optional heating step (ii) and may be carried out before or after the homogenizing step (iii).

Milk fat as used in the optional blending step can be in any arbitrary form (e.g. in an anhydrous form) having different fat content. Suitable sources of milk fat include cream and butter. Suitable flavours include flavour extracts. Suitable vegetable-based materials include fruit preparations, and suitable stabilizers include hydrocolloids.

If one or more additional components are added in a blending step (iv) after step (iii), the blending step may be followed by a step (v) of further homogenization.

In one embodiment according to the present invention, the inventive process thus comprises step (i), optionally step (ii), and step (iii) followed by:

(iv) blending the milk protein concentrate with one or more of the group comprising milk fat, curd, salt, flavours, vegetable-based material, and stabilizers, and
(v) preferably homogenizing the blended milk protein concentrate.

The optional step (v) may be conducted in a single stage process or in a two-stage process. For example, step (v) may be conducted at a pressure of between 80 and 1400 bar.

In another embodiment according to the present invention, the process for the preparation of a dairy product comprises step (i), optionally step (ii), step (iv), i.e.

(iv) blending the milk protein concentrate with one or more of the group comprising milk fat, curd, salt, flavours, vegetable-based material, and stabilizer, followed by step (iii).

The process of the invention provides a dairy product that fulfils increasing consumer demands as regards syneresis, texture and mouthfeel. In particular, the product obtainable by the process of the invention has improved organoleptic properties due to improved creaminess and improved micro-structure.

It is noted that the inventive process does not require an additional "creaming step" that has conventionally been applied, because step (iii) and step (v), respectively, result in fine protein particles that do not re-aggregate but build the desired firm network spontaneously. That is, already after step (iii) or after step (v), the desired micro-texture of the final dairy product is achievable.

The present invention also pertains to a food product comprising said cream cheese and to the use of said cream cheese as a food ingredient. Food product in the present context means any edible food such as a confectionary product, a snack or bread-based material. Food ingredient means that the dairy product is used as ingredient in, e.g., a confectionary product, a snack or bread-based material, or as a filling, e.g. in a confectionery product or in a bakery snack.

The cream cheese obtainable according to the process of the present invention preferably has a mean protein particle size d4,3 of between 1-15 $\mu$m, more preferably of between 2-10 $\mu$m and even more preferably of between 3 and 5 $\mu$m. In addition, the product obtainable by the inventive process preferably has a firmness as determined by the Stevens method of between 80 and 140 g, and the syneresis of said product is preferably below 0.2 wt-%.

**Examples**

Following below, exemplary embodiments of the process and dairy product of the present invention are presented.

Methods of determination:

(i) Determination of mean protein particle size d4,3

The volume related mean protein particle size d4,3 is determined by the laser light diffraction method following the Mie theory for dispersed particles in water using a Malvern MasterSizer 2000 equipped with a small volume presentation unit MSX1.

For determination of the mean protein particle size d4,3, 0.3 g of the dairy product is weighed out into a watch glass. Subsequently, a few drops of deionised water are admixed gently using a rubber stirrer until the dairy product is well dispersed. The dispersion is then transferred into a round bottomed tube using 20 mL deionised water. Then, the tube is covered and vortexed for 30 sec. The mean protein particle size d4,3 of the sample thus obtained is measured for 5 sec. with 5000 sweeps.

(ii) Determination of the Stevens firmness

The Stevens firmness is determined by the penetration peak force of a conical probe into the dairy product to a certain depth using a Stevens LFRA Texture Analyser or the TA.XT2i from Stable Micro Systems Ltd. For determination, samples of the dairy products of the invention are cooled at 10°C for at least 4 hours and are kept unmixed in their original container. The cover foil is removed and the surface is smoothed with a scraper. Subsequently, the sample is placed on the table and the height of the table is adjusted so that the probe is at least 10 mm from the sample surface and so that the probe will hit the sample in the centre. The measurement is started by pressing the "Start" button and the load weight is recorded in grams. It is important that the end result to be reported is the highest force measurement and that duplicate measurements of samples of similar dimensions do not exceed a relative standard deviation of 10%.

(iii) Determination of Syneresis

Syneresis of the dairy products of the invention can be determined by storing the product in closed tubs for 5 days at 4°C after production, then keeping it for 1 day at 10°C. At the following day, 5 tubs are measured at 10+/-2°C. To measure the syneresis (= wheying off) in an individual container (tub), the tub is opened and left on a biased surface with one corner down without pouring off the liquid for 30 sec, then the free liquid is poured off while weighing it on a scale, and the poured off liquid is related to the initial total cheese weight (incl. the free liquid). The syneresis is expressed as wt-% after calculating the mean of 5 replicate tubs.

Milk protein concentrate comprising 22.9 wt.-% total solids (1.3 wt.-% fat, 7.43 wt.-% lactose, 11.4 wt.-% total protein, 1.42 wt.-% ash incl. 0.21 wt.-% calcium and 0.073 wt.-% sodium, and 1.35% other solids) was dia-filtered so as to obtain variable compositions down to a lowest total solids content of 16.2 wt.-% (1,35 wt.-% fat, 11.76 wt.-% protein, 1.35 wt.-% lactose, 0.79 wt.-% ash, incl. 0.169 wt.-% calcium and 0.032 wt.-% sodium, and 0.95% other solids).

Example 1 (reference, not in accordance with the invention):

The pH of a milk protein concentrate comprising 22,5 wt.-% total solids was adjusted to a pH value of about 4.8 using 0.6 wt.-% citric acid powder.

The temperature of the acidified milk protein concentrate was raised from storage temperature to about 65 °C via indirect heating (hot water circulating in the double jacket of the tank) while simultaneously stirring for a proper heat exchange. Then, the temperature was increased to 80°C. Stirring was continued without interruptions while the product temperature was kept at 80°C for 55 minutes. Subsequently, the milk protein concentrate was cooled down to below 10°C. The milk protein concentrate was then homogenized at 630/130 bar with a lab scale ultra-homogenizer at ambient temperature.

The resulting particle size d4,3 was 3.9 $\mu$m.

An additional step of blending with curd, salt, and stabilizers in a conventional mixing equipment was conducted and the material was homogenized at about 350 bar/70 bar at 70°C in a conventional homogenizer and finally conveyed into a texture build-up reactor as described in EP 1 698 231 A1. The latter equipment comprises a double-jacketed tank with stirring devices, and with a re-circulating loop. In this tank, the complete cheese mass was heated to about 80°C accompanied by stirring for about 30 minutes.

The dairy product thus obtained had a firmness of 115 g as determined by the Stevens method, and a mean protein particle size d4,3 of 10.4 $\mu$m.

Example 2:

In another example according to the present invention, the milk protein concentrate obtained in Example 1 after acidification and subsequent heating was cold homogenized at 630/130 bar and was blended with fresh cheese curd, fat, salt and stabilizer to give the same composition as in example 1. Subsequently, the mix was homogenized at 1260/250 bar. The final cheese composition comprised 26.5 % solids, 11.9% fat, 8.8% protein, and 5.8% other solids. The resulting cold Stevens value was 100 g, and the d4,3 value was 10.8 $\mu$m.

Example 3:

In another example, a milk protein concentrate obtained after acidification to a pH value of 4.8 via ultra-filtration and having a total solid content of 19 wt.-% (12 wt.-% protein, 0.5 wt.-% fat) was homogenized at a temperature of 10 °C at a pressure of 800 bar/160 bar. The resulting particle size d4,3 of the material thus obtained was 8.8 $\mu$m.

Example 4:

In a further example, full fat cream cheese was obtained by blending the acidified, heat-treated and homogenized milk protein concentrate of example 1 in an amount of 11 % with full fat curd and salt in order to obtain a final cream cheese composition with about 22.2 % fat and 35.6 % total solids, having a pH of 4.95. The blend thus obtained was single-stage homogenized at 600 bar. The dairy product had a particle size d4,3 of 11.6 $\mu$m showing a Stevens firmness of 100 g and a syneresis of 0.16 %.

**Claims**

1. A process for the preparation of cream cheese comprising in this order the steps of:

   (i) adjusting milk protein concentrate to a pH of from 4.1 to 5.4,
   (ii) optionally heating the milk protein concentrate and
   (iii) homogenizing the milk protein concentrate at a pressure of 500 bar or above and at a temperature not exceeding 40°C, wherein the ratio of whey protein/casein is smaller than 1/1.

2. The process according to claim 1 wherein the homogenizing step is conducted at a pressure of between 600 and 1200 bar.

3. The process according to claim 1 or 2 wherein the pH is adjusted to a pH of from 4.3 to 5.3 in step (i).

4. The process according to any one of claims 1 to 3, further comprising one or more steps of blending the milk protein concentrate with one or more of milk fat, curd, salt and stabilizers.

5. Cream cheese obtainable by the process according to any one of claims 1 to 4.

6. The cream cheese according to claim 5 wherein the mean protein particle size d4,3 is between 1 and 15 $\mu$m.

7. A food product comprising the cream cheese according to claim 5 or 6.

8. Use of the cream cheese according to claim 5 or 6 as a food ingredient.


**Patentansprüche**

1. Verfahren zur Herstellung von Frischkäse, umfassend in dieser Reihenfolge die Schritte:

   (i) Einstellen von Milchproteinkonzentrat auf einen pH-Wert von 4,1 bis 5,4,
   (ii) optional Erhitzen des Milchproteinkonzentrats und
   (iii) Homogenisieren des Milchproteinkonzentrats bei einem Druck von 500 bar oder höher und einer Temperatur von höchstens 40°C, wobei das Verhältnis von Molkenprotein/Casein kleiner als 1/1 ist.

2. Verfahren nach Anspruch 1, bei dem der Homogenisierungsschritt bei einem Druck zwischen 600 und 1200 bar durchgeführt wird.

3. Verfahren nach Anspruch 1 oder 2, bei dem der pH-Wert in Schritt (i) auf einen pH-Wert von 4,3 bis 5,3 eingestellt wird.

4. Verfahren nach einem der Ansprüche 1 bis 3, zusätzlich umfassend einen oder mehrere Schritte des Mischens des Milchproteinkonzentrats mit einem oder mehreren Vertretern von Milchfett, Quark, Salz und Stabilisatoren.

5. Frischkäse, erhältlich durch das Verfahren nach einem der Ansprüche 1 bis 4.

6. Frischkäse nach Anspruch 5, bei dem die mittlere Proteinpartikelgröße d4,3 zwischen 1 und 15 $\mu$m ist.

7. Nahrungsmittelprodukt, umfassend den Frischkäse nach Anspruch 5 oder 6.

8. Verwendung des Frischkäses nach Anspruch 5 oder 6 als Nahrungsmittelbestandteil.


**Revendications**

1. Procédé de préparation d'une crème de fromage comprenant dans cet ordre les étapes consistant à :

   (i) ajuster le concentré de protéines de lait à un pH de 4,1 à 5,4,
   (ii) facultativement chauffer le concentré de protéines de lait et

(iii) homogénéiser le concentré de protéines de lait à une pression de 500 bars ou plus et à une température n'excédant pas 40°C, le rapport protéine de lactosérum/caséine étant inférieur à 1/1.

2. Procédé selon la revendication 1, dans lequel l'étape d'homogénéisation est réalisée à une pression comprise entre 600 et 1200 bars.

3. Procédé selon la revendication 1 ou 2, dans lequel le pH est ajusté à une valeur de 4,3 à 5,3 dans l'étape (i).

4. Procédé selon l'une quelconque des revendications 1 à 3, comprenant en outre une ou plusieurs étapes de mélange du concentré de protéines de lait avec un ou plusieurs des matière grasse du lait, lait caillé, sel et agents de stabilisation.

5. Crème de fromage pouvant être obtenue par le procédé selon l'une quelconque des revendications 1 à 4.

6. Crème de fromage selon la revendication 5, dans laquelle la taille moyenne des particules de protéine d4,3 est comprise entre 1 et 15 $\mu$m.

7. Produit alimentaire comprenant la crème de fromage selon la revendication 5 ou 6.

8. Utilisation de la crème de fromage selon la revendication 5 ou 6 en tant qu'ingrédient alimentaire.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1698231 A1
- US 6861080 B1
- US 20040197450 A1
- US 6605311 B2
- US 6497913 B1
- EP 0250623 B1
- WO 9218239 A
- US 5094873 A